(19) **Europäisches Patentamt**
**European Patent Office**
**Office européen des brevets**

(11) **EP 2 084 496 B1**

(12) **FASCICULE DE BREVET EUROPEEN**

(45) Date de publication et mention de la délivrance du brevet:
**03.01.2018 Bulletin 2018/01**

(21) Numéro de dépôt: **07870336.0**

(22) Date de dépôt: **26.11.2007**

(51) Int Cl.:
***G01D 5/14*** *(2006.01)*

(86) Numéro de dépôt international:
**PCT/FR2007/001937**

(87) Numéro de publication internationale:
**WO 2008/071875 (19.06.2008 Gazette 2008/25)**

(54) **CAPTEUR DE POSITION LINEAIRE OU ROTATIF A PROFIL D'AIMANT VARIABLE**

DREH- ODER LINEARPOSITIONSSENSOR MIT EINEM VARIABLEN MAGNETPROFIL

ROTARY OR LINEAR POSITION SENSOR HAVING A VARIABLE MAGNET PROFILE

(84) Etats contractants désignés:
**AT BE BG CH CY CZ DE DK EE ES FI FR GB GR HU IE IS IT LI LT LU LV MC MT NL PL PT RO SE SI SK TR**

(30) Priorité: **28.11.2006 FR 0655142**

(43) Date de publication de la demande:
**05.08.2009 Bulletin 2009/32**

(73) Titulaire: **Moving Magnet Technologies (MMT)
25000 Besançon (FR)**

(72) Inventeur: **FRACHON, Didier
25000 Besançon (FR)**

(74) Mandataire: **IP Trust
2, rue de Clichy
75009 Paris (FR)**

(56) Documents cités:
WO-A-01/55668    WO-A-2005/078395
DE-A1-102004 020 734    GB-A- 2 020 813
US-A1- 2002 089 327    US-A1- 2004 017 187
US-A1- 2005 275 399    US-B1- 6 433 536

**Description**

La présente invention concerne le domaine des capteurs de position magnétiques linéaire ou rotatif comportant au moins un aimant permanent et au moins deux éléments de mesure du champ magnétique mesurant deux composantes différentes en un même point ou deux éléments magnéto-sensibles mesurant la même composante du champ en deux points distincts.

La présente invention se propose d'utiliser un aimant permanent ayant au moins une de ses dimensions variant suivant une fonction non constante, préférentiellement continue et de manière quasi sinusoïdale (épaisseur, largeur ...). L'aimantation de l'aimant permanent pourra être suivant l'une de ses dimensions.

Les capteurs de position linéaire ou angulaire magnétiques ont de nombreux avantages :

- pas de contact mécanique avec la partie mobile, et donc pas d'usure,
- insensibilité à la saleté,
- coût de production réduit,
- longue durée de vie.

La plupart des capteurs magnétiques de position sans contact utilisent des aimants permanents associés à un circuit magnétique, plus ou moins complexe, fait de matériau ferromagnétique utilisé pour guider et/ou concentrer le flux magnétique généré par le ou les aimants permanents mais cela au détriment du coût et des performances du capteur. Par exemple, ces matériaux ferromagnétiques induisent un phénomène d'hystérésis magnétique dans le capteur, qui peut être réduit mais en utilisant des matériaux coûteux.

De plus, ces capteurs mesurent une grandeur physique proportionnelle au flux généré par le ou les aimants et ce flux est donc affecté par des effets dus à la température et au temps (vieillissement des propriétés magnétiques de l'aimant permanent) sur les propriétés magnétiques des aimants permanents. Ces capteurs doivent donc intégrer une compensation électronique pour limiter les effets de la température. Cette compensation n'étant pas parfaite, cela induit une dégradation des performances des capteurs magnétiques basés sur un tel principe.

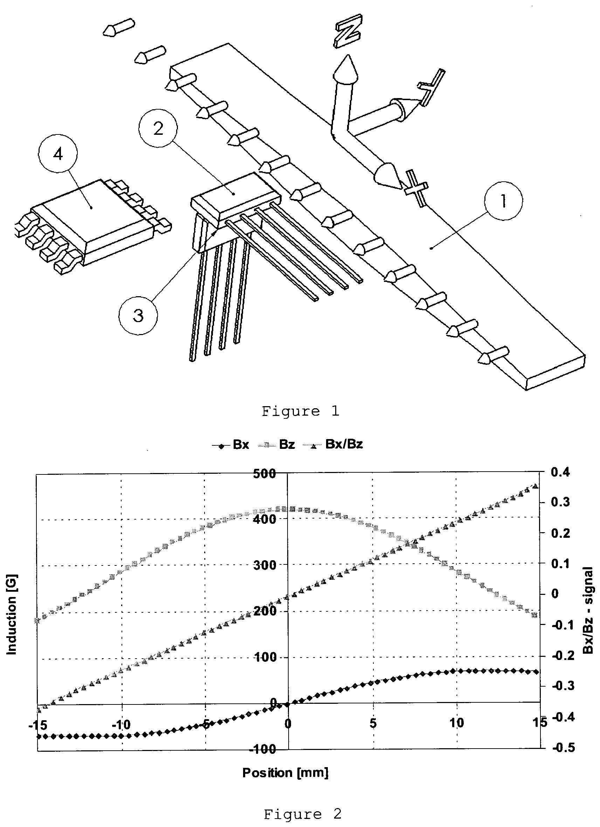

On connaît dans l'état de la technique brevet US6433536 ne décrit pas la caractéristique concernant la mise en oeuvre d'un aimant présentant une seule direction d'aimantation. Au contraire, les figures 1A, 2, 3A et 3B montrent que les aimants sont de type multipolaire, avec des alternances de pôles magnétiques Nord-Sud et Sud-Nord. Ce document n'enseigne donc pas à l'homme du métier une solution selon laquelle la direction d'aimantation est unique, mais l'écarte au contraire d'une telle solution.

Par ailleurs, les figures 1 et 2 montrent des aimants présentant une rupture de pente, et donc une pente qui varie de façon discontinue et non pas continue. Cette deuxième caractéristique revendiquée n'est donc pas non plus enseignée par D1, ce document écartant au contraire l'homme du métier d'une forme d'aimant avec une variation continue du profil.

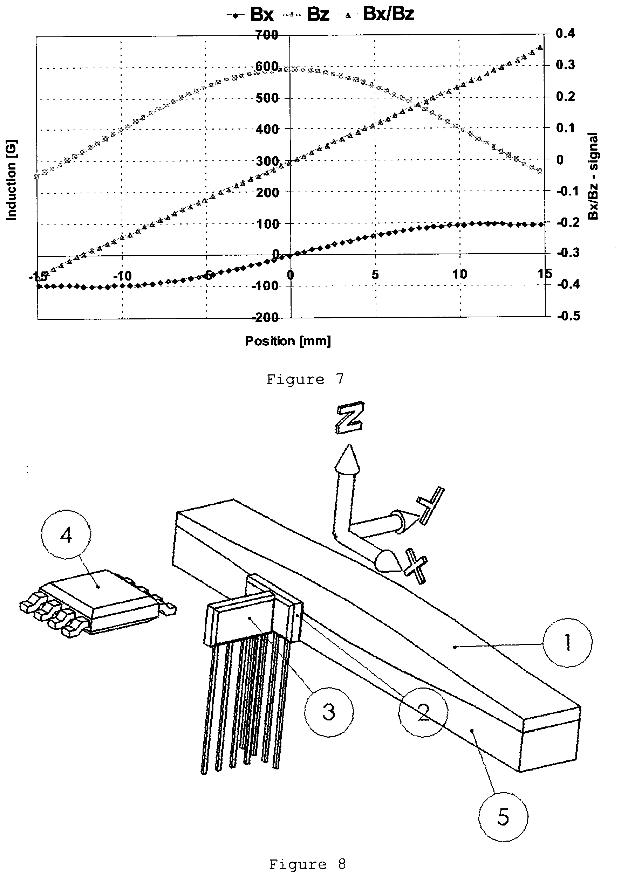

La solution présentée dans la demande de brevet américain US 2002/089327 met également en oeuvre un aimant présentant une aimantation bipolaire. Le brevet décrit d'ailleurs une démarche d'optimisation réalisée sur a transition de l'aimant utilisé. Par définition, une transition sépare les pôles Nord et Sud de l'aimant. Ces deux pôles sont d'ailleurs représentés sur la figure 7, et rien dans la description ne propose de solution dans laquelle l'aimant est aimanté suivant une seule direction.

Par ailleurs, ce document D2 ne divulgue pas la caractéristique relative à la variation du profil de l'aimant ; dans tous les exemples proposés, l'aimant présente une section constante.

La demande de brevet américain US 2004/017187 ne divulgue pas plus que les deux autres documents antérieurs la caractéristique selon laquelle les aimants présentent un profil variant continûment. Il présente des solutions où les aimants présentent soit un profil constant, soit plusieurs polarités. Il ne divulgue pas plus que les autres documents les caractéristiques revendiquées, essentielles pour obtenir l'effet technique attendu. Le document GB2020813 décrit également un capteur selon l'état de la technique. La présente invention se propose de remédier à tout ou partie des problèmes cités précédemment en proposant un capteur magnétique de déplacement angulaire ou linéaire comportant au moins un aimant permanent défini dans un repère cartésien (x,y & z) ou cylindrique (r, Q & z) et au moins deux éléments magnéto-sensibles, l'aimant étant mobile par rapport aux dits éléments magnéto-sensibles, caractérisé en ce que l'aimant présente au moins une dimension variant suivant une fonction non constante quasi-sinusoïdale le long d'un axe du repère et

- dans le cas d'un aimant défini dans un repère cartésien x,y,z, l'aimantation dudit aimant (1) est orientée suivant une seule direction x,y ou z; -dans le cas d'un aimant défini dans un repère cylindrique r,Q,z, l'aimantation dudit aimant (1) est orientée suivant une seule direction r, Q ou z. Les éléments magnéto-sensibles mesurent deux composantes du champ magnétique sensiblement au même point.

Le calcul de la position est fait par un calcul du rapport de deux composantes du champ magnétique ou par un calcul d'arctangente.

La direction d'aimantation de l'aimant permanent peut être choisie suivant l'une quelconque de ses dimensions en fonction des composantes du champ magnétique choisies pour calculer la position linéaire ou angulaire.

De préférence pour une variante linéaire du capteur, l'aimant est constitué par un aimant de longueur (selon la direction du déplacement) proche de la course à mesurer et d'épaisseur variable suivant une fonction sensiblement sinusoïdale. L'aimant est aimanté suivant une direction sensiblement perpendiculaire au sens de déplacement et préférentiellement suivant l'épaisseur. L'aimant génère un champ magnétique dont la composante longitudinale (X) et la composante transversale (Z) mesurées sur un segment rectiligne au voisinage de l'aimant, varient respectivement sensiblement suivant une portion d'une fonction sinus et sensiblement suivant une portion d'une fonction cosinus. En utilisant l'une des deux formules suivantes il est possible d'en déduire la position linéaire ou angulaire de l'aimant permanent :

$$ x = \arctan(\frac{Bx}{Bz})\ ou\ \theta = \arctan(\frac{Bt}{Bz}) $$

où :

- $x$ position linéaire de l'aimant

- $\theta$ position angulaire de l'aimant

- $Bx$ et $Bt$ composante tangentielle du champ magnétique

- $Bz$ composante normale du champ magnétique

Il est également possible d'utiliser une formule plus simple qui correspond au premier terme du développement limité de l'équation précédente :

$$ x = \frac{Bx}{Bz}\ ou\ \theta = \frac{Bt}{Bz} $$

En effet pour les capteurs linéaire ou rotatif de course < 300° la composante transversale Bz varie assez peu sur la course du capteur et donc la formule ci-dessus est une assez bonne approximation.

Le calcul du rapport d'amplitude suivi ou non du calcul de la fonction d'arctangente est réalisé soit par un élément séparé ou directement par un composant de type ASIC (par exemple : MELEXIS 90316) intégrant la mesure de deux composantes du champ magnétique et le calcul d'arc tangente du rapport des deux composantes du champ magnétique ou simplement le calcul du rapport des deux composantes du champ magnétique.

D'une manière plus générale, dans le but d'ajuster la linéarité du signal de sortie il est également possible d'appliquer un coefficient multiplicateur $\alpha$ au rapport des deux composantes de l'induction magnétique avant de calculer l'arctangente de ce même rapport. La fonction permettant de calculer la position est alors donnée par :

$$ x = \arctan(\alpha\frac{Bx}{Bz})\ ou\ \theta = \arctan(\alpha\frac{Bt}{Bz}) $$

La réalisation pratique de ce capteur peut être faite avec la sonde qui se déplace suivant l'axe X pour un capteur linéaire, devant un aimant immobile, ou avec l'aimant mobile et la sonde fixe, la première solution prenant par exemple moins de place et la deuxième permettant un assemblage plus aisé du fait des connexions fixes.

L'invention présentée a plusieurs avantages à comparer aux solutions existantes :

    ✔ de par le fait que la position linéaire ou angulaire est calculée à l'aide d'un rapport d'amplitudes, il est possible de s'affranchir des variations des propriétés magnétiques de l'aimant en température et dans le temps ;

    ✔ pour les capteurs linéaire et rotatif, nous utilisons un aimant de longueur proche de la course utile à mesurer ;

✔ aimantation unidirectionnelle de l'aimant.

L'avantage de cette invention est tout d'abord que la course obtenue dépend principalement des dimensions de l'aimant et que la mesure ne dépend pas de l'induction rémanente de l'aimant et ni donc de son évolution en fonction de la température, ce qui évite de compenser cette variation en température.

L'avantage économique de la structure est dû au fait que le capteur est réduit au minimum avec l'utilisation d'un aimant permanent aimanté dans une seule direction (pour un capteur linéaire : suivant l'épaisseur, la largeur ou la longueur et suivant l'épaisseur, radialement ou tangentiellement pour un capteur rotatif) et d'une sonde capable de mesurer deux composantes du champ magnétique de préférence en un même point. Comme le traitement des signaux mesurés correspond à un calcul d'angle (calcul d'arctangente) ou d'un simple rapport de deux composantes du champ magnétique, il est possible d'utiliser des sondes normalement utilisées pour les capteurs de position angulaire ou linéaire (ex : MLX90316 de chez Melexis), avec toutes les corrections éventuelles de non linéarité utilisées dans ces capteurs.

Il est également possible d'utiliser des sondes à base de magnéto-résistances capables de mesurer l'angle de l'induction magnétique dans le plan de l'élément magnéto-sensible. Ces sondes n'intègrent pas directement le calcul du rapport des composantes et/ou le calcul de l'arctangente. Ce calcul doit donc être fait par l'intermédiaire d'un composant externe.

Pour des raisons de fabrication, l'aimant peut être monté sur une culasse ferromagnétique, cela permet de renforcer la tenue mécanique de l'aimant. Du point de vue magnétique la modification des composantes du champ magnétique par l'utilisation d'une culasse ferromagnétique dépend de la direction d'aimantation de l'aimant. L'amplitude des composantes peut être augmentée ou diminuée selon la direction d'aimantation de l'aimant.

La forme de l'aimant est compatible avec les procédés de réalisation utilisés pour la fabrication d'aimant permanent. Des aimants à base de ferrite, NbFeB ou SmCo par exemple peuvent être utilisés avec différentes méthodes de fabrication telle que l'injection, le pressage ou le frittage.

Dans un autre mode de réalisation, on peut utiliser deux sondes magnéto-sensibles, mesurant la même composante du champ magnétique pour la même position, en utilisant la symétrie de l'aimant. Cela peut être utile pour annuler ou diminuer l'influence d'un champ magnétique extérieur.

De façon plus générale, au moins l'une des dimensions de l'aimant permanent peut varier selon une fonction quelconque pour adapter le signal de sortie du capteur à une fonction prédéfinie ne présentant pas obligatoirement une variation linéaire.

L'invention sera mieux comprise à la lecture de la description et des figures qui suivent :

- la figure 1 représente un aimant rectiligne à épaisseur variable quasi sinusoïdale aimanté sensiblement suivant la largeur pour un capteur de déplacement linéaire suivant la présente invention ;
- la figure 2 représente les composantes x et z de l'induction magnétique, en un point x, y et z situé sur le coté de l'aimant, en fonction de la position x de l'aimant représenté en figure 1 ;
- la figure 3 représente un aimant rectiligne à épaisseur variable quasi sinusoïdale ayant une face plane, et aimanté sensiblement suivant la largeur pour un capteur de déplacement linéaire suivant la présente invention ;
- la figure 4 représente un aimant rectiligne à épaisseur variable quasi sinusoïdale aimanté sensiblement suivant l'épaisseur pour un capteur de déplacement linéaire suivant la présente invention ;
- la figure 5 représente les composantes x et z de l'induction magnétique, en un point x, y et z situé au-dessus de l'aimant, en fonction de la position x de l'aimant représenté en figure 4 ;
- la figure 6 représente un aimant rectiligne à épaisseur variable quasi sinusoïdale aimanté sensiblement suivant sa longueur pour un capteur de déplacement linéaire suivant la présente invention ;
- la figure 7 représente les composantes x et z de l'induction magnétique, en un point x, y et z situé au-dessus de l'aimant, en fonction de la position x de l'aimant représenté en figure 6 ;
- la figure 8 représente un aimant rectiligne à épaisseur variable sensiblement suivant une fonction sinusoïdale et monté sur une culasse ferromagnétique ;
- la figure 9 représente deux aimants rectilignes à épaisseur variable quasi sinusoïdale aimantés sensiblement suivant la largeur en sens opposé pour un capteur de déplacement linéaire suivant la présente invention ;
- la figure 10 représente un aimant curviligne à épaisseur variable quasi sinusoïdale aimanté sensiblement radialement pour un capteur de déplacement rotatif suivant la présente invention ;
- la figure 11 représente un aimant curviligne à épaisseur variable quasi sinusoïdale aimanté sensiblement suivant l'épaisseur pour un capteur de déplacement rotatif suivant la présente invention ;
- la figure 12 représente un aimant curviligne à épaisseur variable quasi sinusoïdale aimanté suivant l'épaisseur pour un capteur de déplacement rotatif suivant la présente invention ;
- la figure 13 représente un aimant disque à épaisseur variable sensiblement suivant une fonction sinusoïdale aimanté suivant son épaisseur ;
- la figure 14 représente les trois composantes de l'induction magnétique au voisinage de l'aimant de la figure 13 ;

- la figure 15 représente un aimant disque à épaisseur variable sensiblement suivant une fonction sinusoïdale aimanté sensiblement axialement avec trois éléments magnéto-sensibles mesurant la même composante de l'induction magnétique ;
- la figure 16 représente deux aimants disques à épaisseur variable sensiblement suivant une fonction sinusoïdale aimantés sensiblement axialement et un composant capable de mesurer deux composantes du champ magnétique en un seul point ;
- la figure 17 représente les trois composantes de l'induction magnétique mesurées au voisinage de l'aimant de la figure 16 ;
- la figure 18 représente un aimant disque à épaisseur variable sensiblement suivant une fonction sinusoïdale aimanté sensiblement tangentiellement ;
- la figure 19 représente les trois composantes de l'induction magnétique mesurées au voisinage de l'aimant de la figure 18 ;
- la figure 20 représente deux aimants disques à épaisseur variable sensiblement suivant une fonction sinusoïdale aimantés sensiblement tangentiellement et un composant capable de mesurer deux composantes du champ magnétique en un seul point ;
- la figure 21 représente les trois composantes de l'induction magnétique mesurées au voisinage de l'aimant de la figure 20 ;
- la figure 22 représente un aimant disque à épaisseur variable sensiblement suivant une fonction sinusoïdale aimanté sensiblement radialement ;
- la figure 23 représente les trois composantes de l'induction magnétique mesurées au voisinage de l'aimant de la figure 22 ;
- la figure 24 représente un aimant disque à épaisseur variable sensiblement suivant une fonction sinusoïdale aimanté sensiblement radialement avec trois éléments magnéto-sensibles mesurant la même composante de l'induction magnétique ;
- la figure 25 représente deux aimants disques à épaisseur variable sensiblement suivant une fonction sinusoïdale aimantés sensiblement radialement et un composant capable de mesurer deux composantes du champ magnétique en un seul point ;
- la figure 26 représente les trois composantes de l'induction magnétique mesurées au voisinage de l'aimant de la figure 25 ;
- la figure 27 représente un aimant disque à largeur radiale variable sensiblement suivant une fonction sinusoïdale aimanté sensiblement tangentiellement ;
- la figure 28 représente un aimant disque à largeur radiale variable sensiblement suivant une fonction sinusoïdale aimanté sensiblement axialement ;
- la figure 29 représente un aimant disque à largeur radiale variable sensiblement suivant une fonction sinusoïdale aimanté sensiblement radialement ;
- la figure 30 représente un capteur suivant la présente invention avec un dispositif de blindage des champs magnétiques extérieurs.

La figure 1 représente un aimant (1) ayant une aimantation dont la direction est sensiblement orientée suivant la largeur de l'aimant et dont l'épaisseur varie sensiblement suivant une fonction sinus. La mesure du champ magnétique au voisinage de l'aimant est réalisée par un ou des éléments magnéto-sensibles (2 et 3). Comme on peut le constater sur la figure 2, les composantes d'induction magnétique x et z mesurées par deux éléments magnéto-sensible (2) et (3) sur un segment rectiligne décalé par rapport au centre de l'aimant suivant y, suivent respectivement sensiblement une fonction sinus et une fonction cosinus, le calcul d'arctangente de Bx/Bz ou Bx/Bz réalisé par (4) donne un signal linéaire et fournit une information proportionnelle à la position de l'aimant par rapport à la sonde.

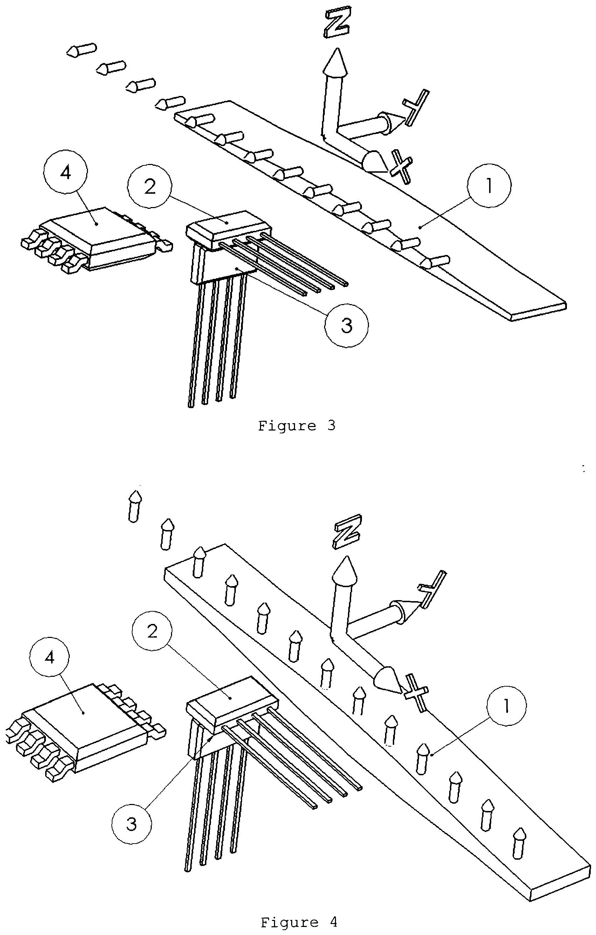

La figure 3 représente un aimant (1) ayant une aimantation dont la direction est sensiblement orientée suivant la largeur de l'aimant et dont l'épaisseur varie sensiblement suivant une fonction sinus par rapport à une face plane.

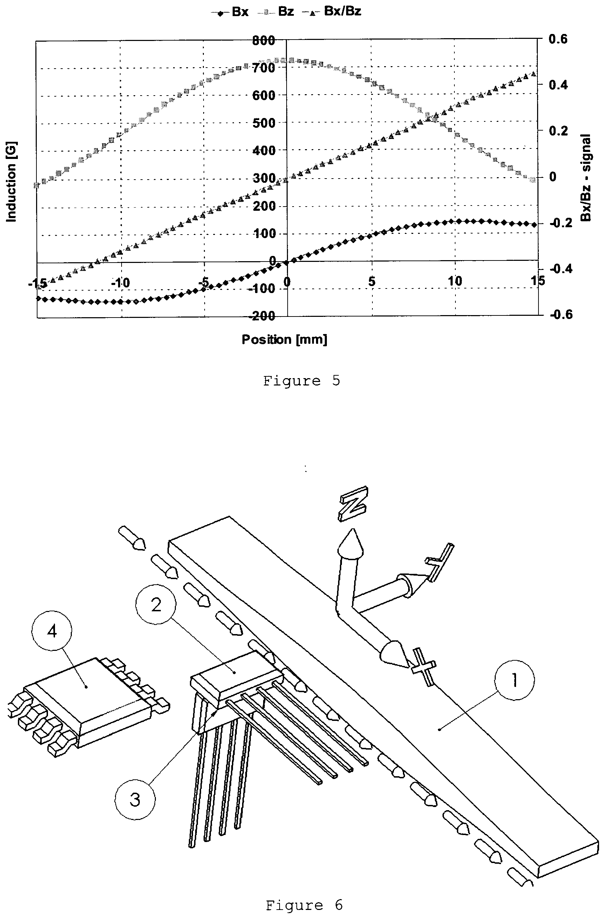

La figure 4 représente un aimant (1) ayant une aimantation, dont la direction est sensiblement orientée suivant l'épaisseur de l'aimant dont l'épaisseur varie quasi sinusoïdalement. La mesure du champ magnétique au voisinage de l'aimant est réalisée par deux éléments magnéto-sensibles (2) et (3). Comme on peut le constater sur la figure 5, les composantes d'induction magnétique x et z sur un segment rectiligne au-dessus de l'aimant suivent respectivement sensiblement une fonction sinus et une fonction cosinus, le calcul d'arctangente de Bx/Bz ou Bx/By réalisé par (4) donne un signal linéaire et donne une information de la position de l'aimant par rapport à la sonde.

La figure 6 représente un aimant (1) ayant une aimantation, dont la direction est sensiblement orientée suivant la longueur de l'aimant dont l'épaisseur varie sensiblement sinusoïdalement. La mesure du champ magnétique au voisinage de l'aimant est réalisée par des éléments magnéto-sensibles (2) et (3). Comme on peut le constater sur la figure 7, les composantes d'induction magnétique x et z sur un segment rectiligne au voisinage de l'aimant suivent respectivement sensiblement une fonction sinus et une fonction cosinus, le calcul d'arctangente de Bx/Bz ou Bx/By réalisé par (4) donne un signal linéaire et donne une information de la position de l'aimant par rapport à la sonde.

La figure 8 représente un aimant rectiligne (1) à épaisseur variable sensiblement suivant une fonction sinusoïdale et monté sur une culasse ferromagnétique (5) permettant d'améliorer les propriétés mécaniques du capteur. L'aimant peut également être encastré dans cette culasse ferromagnétique. En ce qui concerne les modifications induites sur les composantes du champ magnétique, cela dépend des composantes et aussi de la direction d'aimantation de l'aimant. L'amplitude des composantes du champ magnétique peut être augmentée ou diminuée en fonction de la direction d'aimantation.

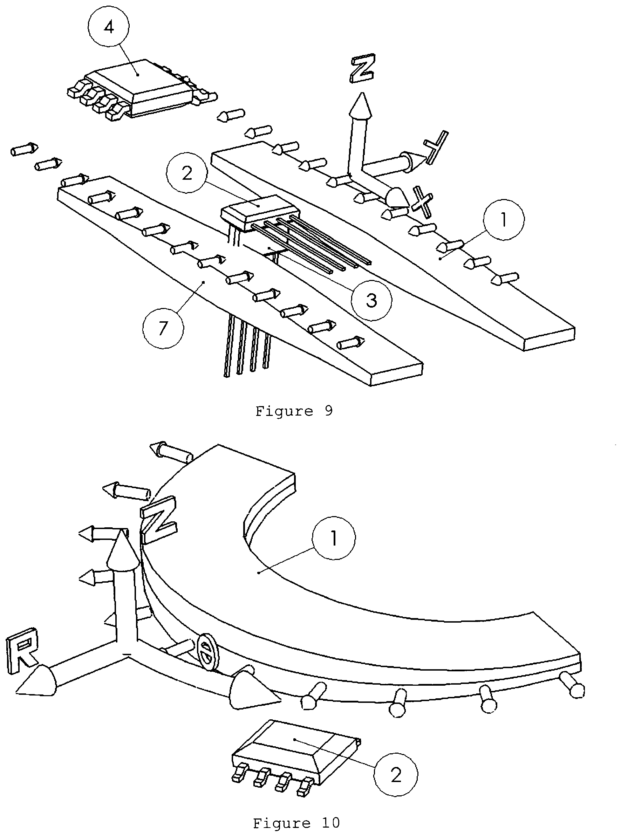

La figure 9 représente un capteur de déplacement linéaire à deux aimants aimantés (1) et (7) suivant leur largeur et en sens opposé. Un tel arrangement permet de s'affranchir de l'influence qu'induit un décalage du point de mesure au cours de la vie du capteur. En effet, le point de mesure est situé entre les deux aimants. Dans le cas de la structure de la figure 1, si la position du point de mesure varie au cours du temps suivant la direction y, il va apparaître une légère erreur de linéarité, une structure symétrique permet d'éliminer cette influence. Il est possible de trouver des configurations similaires pour des aimantations suivant les directions x et z.

La figure 10 représente un aimant curviligne (1) de longueur angulaire inférieure à 360° aimanté sensiblement radialement et dont l'épaisseur varie sensiblement suivant une fonction sinusoïdale. La mesure du champ magnétique au voisinage de l'aimant est réalisée par un élément magnéto-sensible (2). Les composantes tangentielle Bt et axiale Bz de l'induction magnétique sur un arc de cercle au voisinage de l'aimant varient sensiblement suivant respectivement une fonction sinus et une fonction cosinus. Un calcul d'arctangente du rapport Bt/Bz ou simplement le calcul du rapport Bt/Bz permet de déduire la position angulaire de l'aimant.

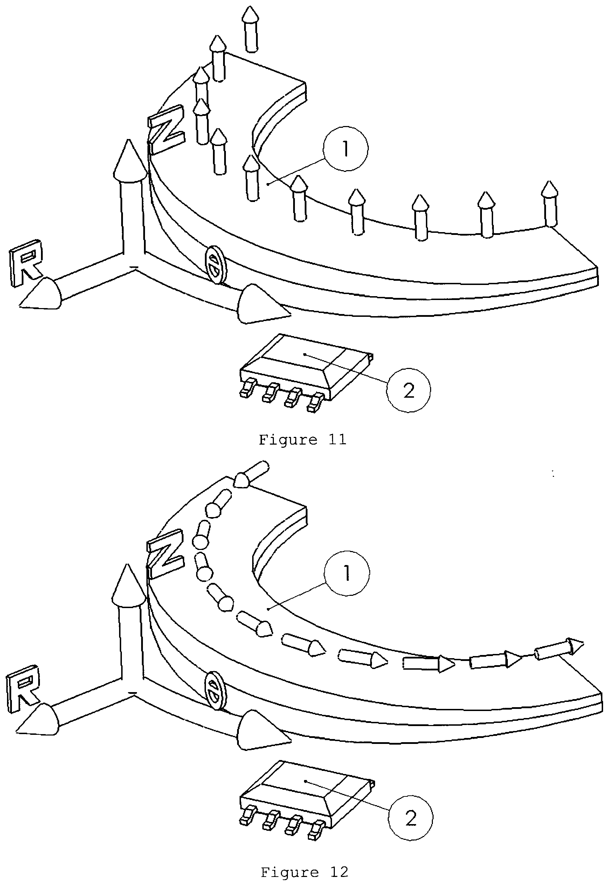

La figure 11 représente un aimant curviligne (1) de longueur angulaire inférieure à 360° aimanté sensiblement suivant son épaisseur et dont l'épaisseur varie sensiblement suivant une fonction sinusoïdale. La mesure du champ magnétique au voisinage de l'aimant est réalisée par un élément magnéto-sensible (2). Les composantes tangentielle Bt et axiale Bz de l'induction magnétique sur un arc de cercle au voisinage de l'aimant varient sensiblement suivant respectivement une fonction sinus et une fonction cosinus. Un calcul d'arctangente du rapport Bt/Bz ou simplement le rapport Bt/Bz permet de déduire la position angulaire de l'aimant.

La figure 12 représente un aimant curviligne de longueur angulaire inférieure à 360° aimanté sensiblement tangentiellement et dont l'épaisseur varie sensiblement suivant une fonction sinusoïdale, les composantes tangentielle Bt et axiale Bz de l'induction magnétique sur un arc de cercle autour de l'aimant varient sensiblement suivant respectivement une fonction sinus et une fonction cosinus. Un calcul d'arctangente du rapport Bt/Bz ou simplement le rapport Bt/Bz permet de déduire la position angulaire de l'aimant.

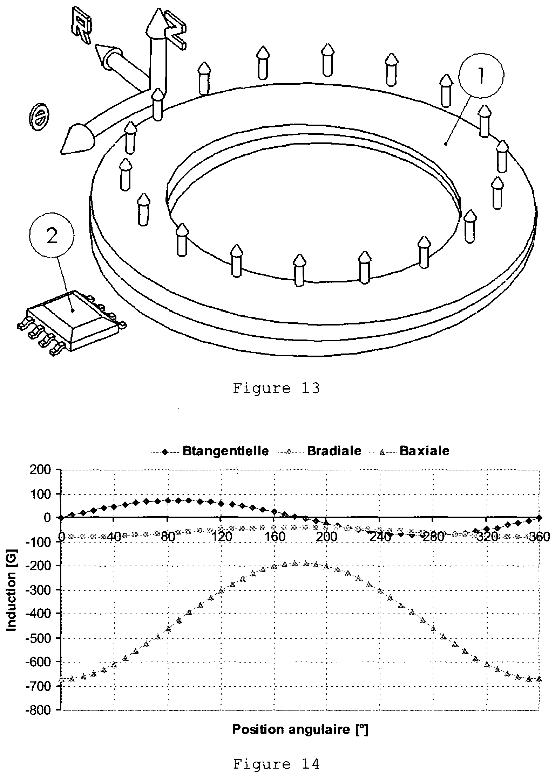

La figure 13 représente un aimant disque (1) à épaisseur variable suivant une fonction sensiblement sinusoïdale et aimanté sensiblement axialement.

La figure 14 représente les trois composantes de l'induction magnétique au voisinage de l'aimant de la figure 13. Les composantes axiale Bz et radiale Br sont en phase alors que la composante tangentielle Bt est déphasée de 90° par rapport aux deux autres. La mesure de deux composantes du champ magnétique est réalisée par un élément magnéto-sensible de type ASIC (2). Le calcul d'arctangente du rapport Bt/Bz ou du rapport Bt/Br ne fonctionne pas, car il y a un offset sur les composantes axiale et radiale ; cet offset doit être compensé. Il faut également compenser la différence d'amplitude des deux composantes du rapport. Pour pouvoir déduire la position angulaire il est donc nécessaire de calculer l'arctangente du rapport Gain Bt/(Bz - OffsetBz).

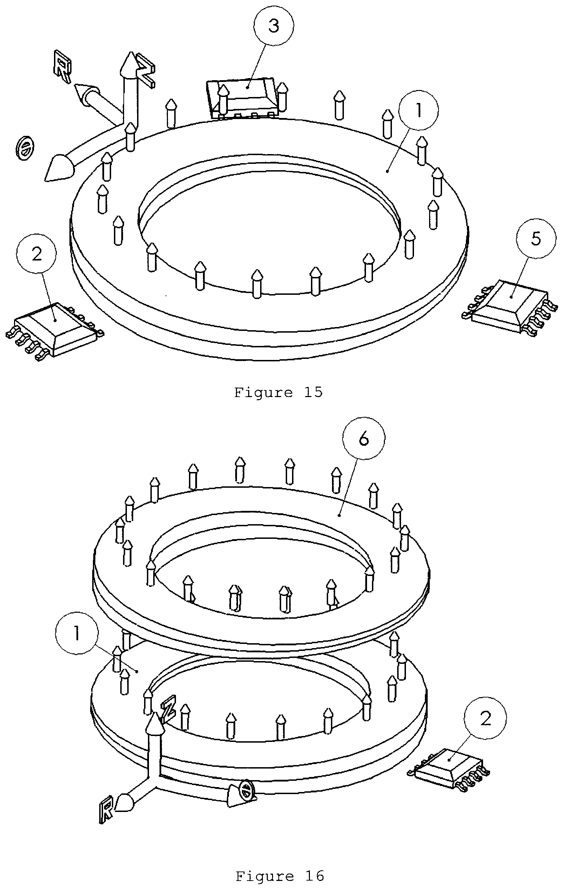

La figure 15 représente la même configuration que celle de la figure 13, mais le calcul de la position angulaire de l'aimant est réalisé en positionnant trois sondes (2, 3 & 4) décalées de 120° sur un cercle de rayon R au voisinage de l'aimant et mesurant la même composante du champ magnétique (B1, B2 et B3). Les composantes du champ magnétique variant selon une fonction sensiblement sinusoïdale, la position angulaire de l'aimant peut alors être calculée à l'aide des formules suivantes :

$$B1 = Amplitude * Cos(Angle) + Offset$$

$$B2 = Amplitude * Cos(Angle + 2\pi/3) + Offset$$

$$B3 = Amplitude * Cos(Angle + 4\pi/3) + Offset$$

$$Offset = 13 (B1 + B2 + B3)$$

$$Amplitude = -\frac{2\sqrt{(B2-B3)^2}\sqrt{B1^2 + B2^2 - B2B3 + B3^2 - B1(B2+B3)}}{3(B2-B3)}$$

$$Angle = -ArcSec[\frac{2(B2-B3)\sqrt{B1^2 + B2^2 - B2B3 + B3^2 - B1(B2+B3)}}{\sqrt{(B2-B3)^2}(-2B1 + B2 + B3)}]$$

La distance angulaire entre les trois éléments magnéto-sensibles a été choisie égale à 120° dans l'exemple ci-dessus, mais d'autres valeurs sont également possibles et conduisent à d'autres équations. Il suffit de résoudre alors le système :

$$B1 = Amplitude * Cos(Angle) + Offset$$

$$B2 = Amplitude * Cos(Angle + \Theta_1) + Offset$$

$$B3 = Amplitude * Cos(Angle + \Theta_2) + Offset$$

La figure 16 représente deux aimants disques (1) et (6) à épaisseur variable suivant une fonction sensiblement sinusoïdale et aimanté sensiblement axialement dans le même sens. Les deux aimants sont coaxiaux et décalés axialement d'une certaine distance. Ces deux aimants sont également décalés angulairement d'un angle sensiblement égal à 180°.

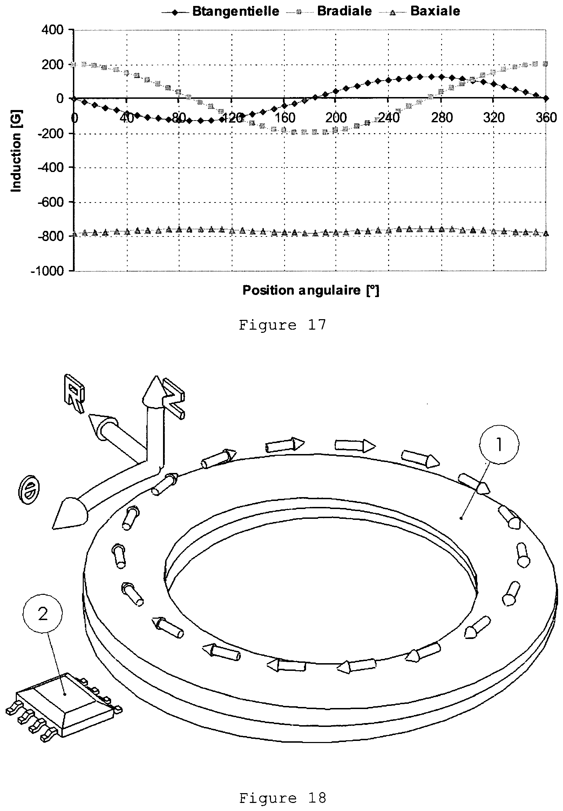

La figure 17 montre les trois composantes de l'induction magnétique entre les deux aimants. La mesure de deux composantes de l'induction magnétique entre les deux aimants est réalisée par deux éléments magnéto-sensibles intégrés ou non dans le même boîtier (2). En empilant de cette façon les deux aimants, il est possible de s'affranchir du problème d'offset sur la composante radiale de l'induction. Les composantes tangentielle Bt et radiale Br sont sinusoïdales et déphasées d'un quart de période donc un calcul d'arctangente du rapport Bt/Br après avoir appliqué une compensation d'amplitude permet de déduire la position angulaire de l'aimant. Il est possible en choisissant de façon adéquate la position de mesure d'avoir les deux composantes de même amplitude et donc de s'affranchir de la compensation de gain entre les deux composantes.

La figure 18 représente un aimant disque (1) à épaisseur variable suivant une fonction sensiblement sinusoïdale et aimanté sensiblement tangentiellement. La mesure de deux composantes du champ magnétique au voisinage de l'aimant est réalisée par deux éléments magnéto-sensibles intégrés ou non dans un même boîtier (2) et capables de mesurer ces deux composantes en un seul point. L'élément magnéto-sensible peut intégrer le calcul du rapport des amplitudes et le calcul d'arctangente.

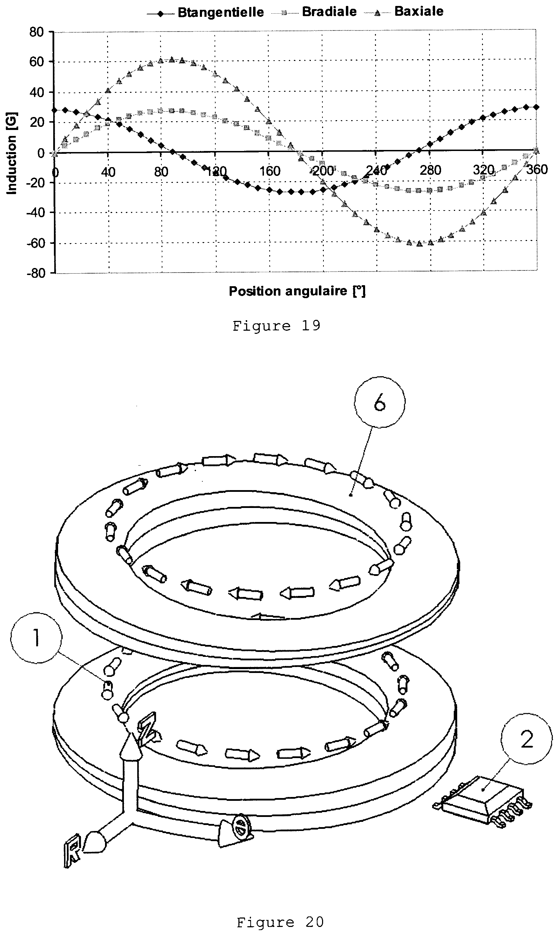

La figure 19 montre les trois composantes de l'induction magnétique mesurées au voisinage de l'aimant de la figure 18. Les composantes axiale Bz et radiale Br sont en phase alors que la composante tangentielle Bt est déphasée de 90° par rapport aux deux autres. Un calcul d'arctangente du rapport Bt/Bz ou du rapport Bt/Br après avoir appliqué une compensation d'amplitude permet de déduire la position angulaire de l'aimant.

La figure 20 représente deux aimants disques (1) et (6) à épaisseur variable suivant une fonction sensiblement sinusoïdale et aimanté sensiblement tangentiellement en sens opposé. Les deux aimants sont coaxiaux et décalés axialement d'une certaine distance. Ces deux aimants sont également décalés angulairement d'un angle sensiblement égal à 180°. La mesure de deux composantes du champ magnétique entre les deux aimants est réalisée par deux éléments magnéto-sensible (2) intégré ou non dans le même boîtier. En empilant de cette façon les deux aimants, il est possible de s'affranchir du problème d'offset sur la composante radiale de l'induction.

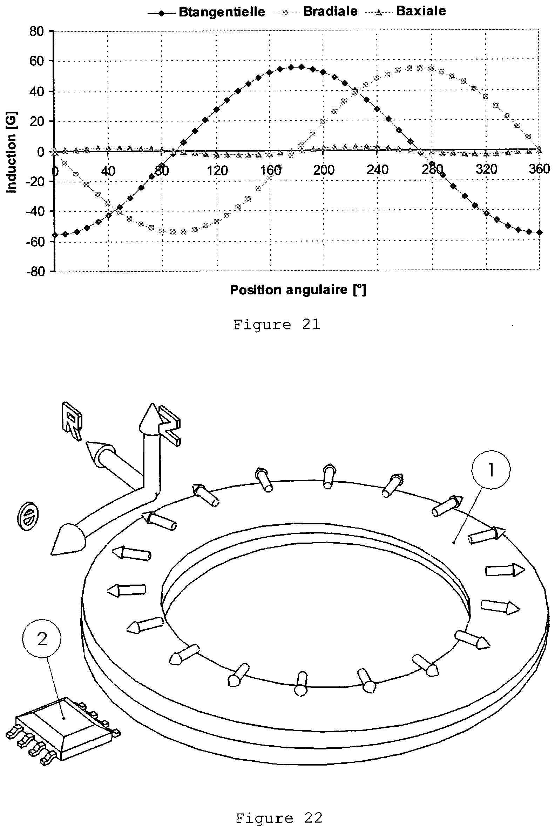

La figure 21 montre les trois composantes de l'induction magnétique entre les deux aimants de la figure 20. Les composantes tangentielle Bt et radiale Br sont sinusoïdales et déphasées d'un quart de période donc un calcul d'arctangente du rapport Bt/Br après avoir appliqué une compensation d'amplitude permet de déduire la position angulaire de l'aimant. En effet, les amplitudes des composantes de l'induction magnétique sont différentes et donc pour que le décodage de l'angle, en utilisant 2 composantes de l'induction magnétique variant sinusoïdalement mais déphasées de 90° fonctionne, il est nécessaire d'avoir des amplitudes identiques sur les deux signaux. Il est possible en choisissant de façon adéquate la position de mesure d'avoir les deux composantes de même amplitude et donc de s'affranchir de la compensation de gain entre les deux composantes.

La figure 22 représente un aimant disque (1) à épaisseur variable suivant une fonction sensiblement sinusoïdale et aimanté radialement. La mesure de deux composantes de l'induction magnétique en un même point au voisinage de l'aimant est réalisée par deux éléments magnéto-sensibles intégrés dans un même boîtier (2).

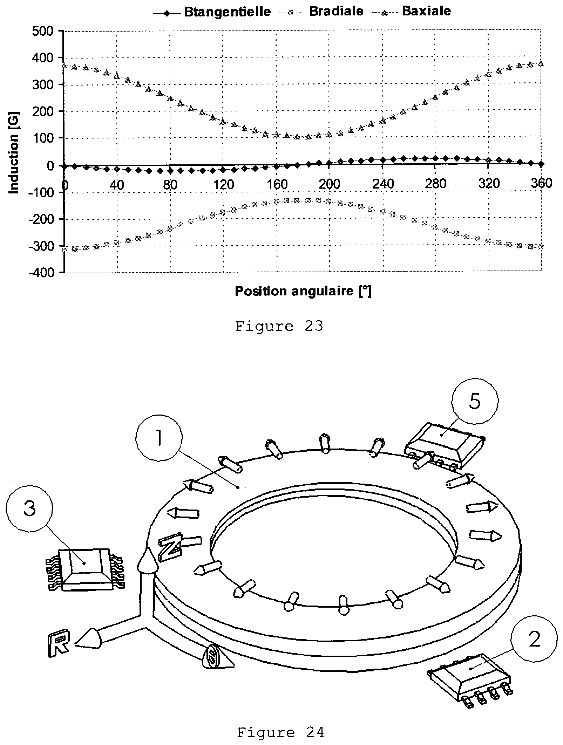

La figure 23 représente les trois composantes de l'induction magnétique mesurées en un même point. Les composantes axiale Bz et radiale Br sont en phase, alors que la composante tangentielle Bt est déphasée de 90° par rapport aux deux autres. Les amplitudes des trois composantes sont différentes et, pour pouvoir décoder l'angle, il est nécessaire de normaliser les amplitudes en appliquant un facteur multiplicatif GAIN entre les deux composantes avant le calcul de l'arctangente. Un calcul d'arctangente du rapport Bt/Bz ou du rapport Bt/Br ne fonctionne pas, car il y a un offset sur les composantes axiale et radiale. Pour pouvoir déduire la position angulaire, il est nécessaire de calculer l'arctangente du rapport GAIN Bt/(Bz - OffsetBz).

La figure 24 représente une configuration équivalente à la configuration de la figure 22, mais la mesure de l'induction magnétique et réalisée en positionnant trois sondes (2), (3) et (5) décalées de 120° sur un cercle de rayon R au voisinage de l'aimant et en mesurant la même composante du champ magnétique (B1, B2 et B3), de calculer la position angulaire de l'aimant à l'aide des formules suivantes :

$$B1 = Amplitude * Cos(Angle) + Offset$$

$$B2 = Amplitude * Cos(Angle + 2\pi/3) + Offset$$

$$B3 = Amplitude * Cos(Angle + 4\pi/3) + Offset$$

$$Offset = 13\,(B1 + B2 + B3)$$

$$Amplitude = -\frac{2\sqrt{(B2-B3)^2}\sqrt{B1^2 + B2^2 - B2B3 + B3^2 - B1(B2+B3)}}{3(B2-B3)}$$

$$Angle = -ArcSec[\frac{2(B2-B3)\sqrt{B1^2 + B2^2 - B2B3 + B3^2 - B1(B2+B3)}}{\sqrt{(B2-B3)^2}(-2B1+B2+B3)}]$$

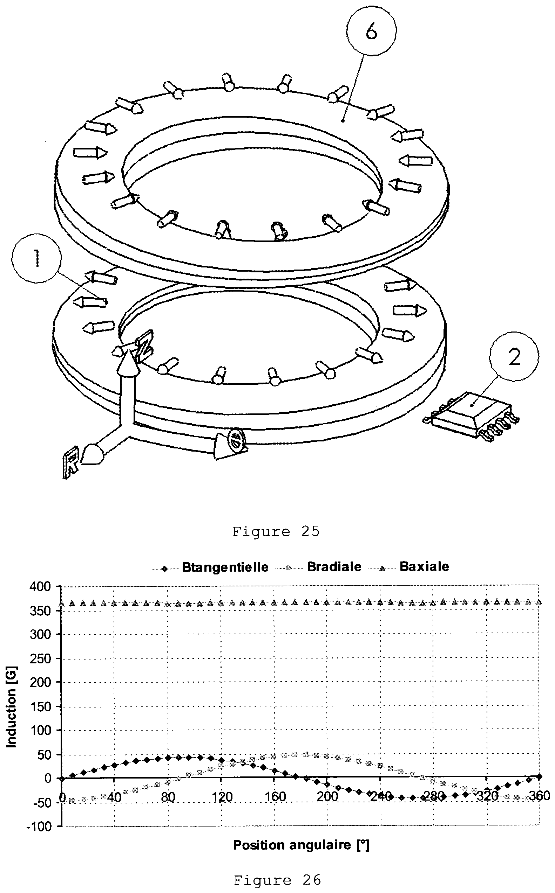

La figure 25 représente deux aimants disques (1) et (6) à épaisseur variable suivant une fonction sensiblement sinusoïdale et aimanté sensiblement radialement en sens opposé. Les deux aimants sont coaxiaux et décalés axialement d'une certaine distance. Ces deux aimants sont également décalés angulairement d'un angle sensiblement égal à 180°. La mesure des deux composantes de l'induction champ magnétique entre les deux aimants est réalisée par deux éléments magnéto-sensible intégré ou non dans le même boîtier (2). En empilant de cette façon les deux aimants il est possible de s'affranchir du problème d'offset sur la composante radiale de l'induction.

La figure 26 représente les trois composantes de l'induction magnétique mesurées en un même point entre les deux aimants. Les composantes tangentielle Bt et radiale Br sont sinusoïdales et déphasées d'un quart de période donc un calcul d'arctangente du rapport Bt/Br après avoir appliqué une compensation d'amplitude permet de déduire la position angulaire de l'aimant. Il est possible en choisissant de façon adéquate la position de mesure d'avoir les deux composantes de même amplitude et donc de s'affranchir de la compensation de gain entre les deux composantes.

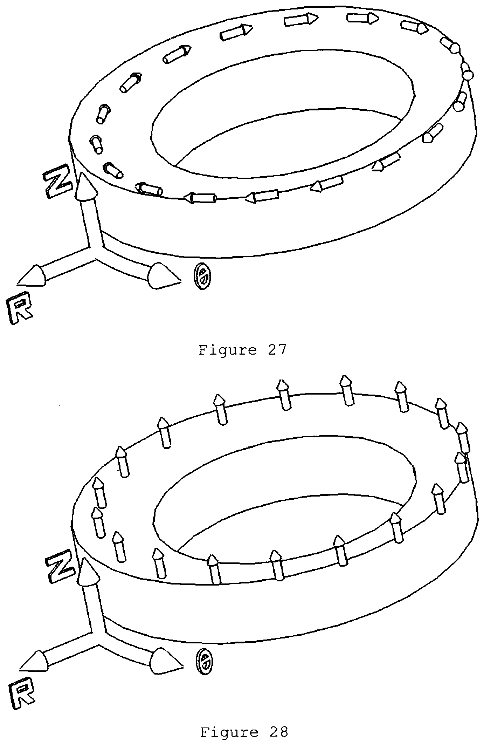

La figure 27 représente un aimant disque à épaisseur radiale variable suivant une fonction sensiblement sinusoïdale et aimanté sensiblement tangentiellement. Dans une telle configuration, il est possible de trouver un point de mesure où deux des composantes du champ magnétique varient suivant une fonction sinus et une fonction cosinus. Un calcul de l'arctangente du rapport de ces 2 composantes avec ou sans compensation de gain permet de déduire la position angulaire de l'aimant. Préférentiellement, dans une telle configuration, les composantes tangentielle et radiale de l'induction seront utilisées avec un point de mesure sur le plan de symétrie de l'aimant, mais d'autres configurations sont également possibles.

La figure 28 représente un aimant disque à épaisseur radiale variable suivant une fonction sensiblement sinusoïdale et aimanté sensiblement axialement. Pour cette configuration, la mesure de la composante tangentielle du champ magnétique au voisinage de l'aimant ainsi que la mesure de la composante radiale ou de la composante axiale ou d'une combinaison de ces deux composantes permet par un calcul d'arctangente du rapport des deux composantes après soustraction de l'offset éventuel d'obtenir la position angulaire de l'aimant.

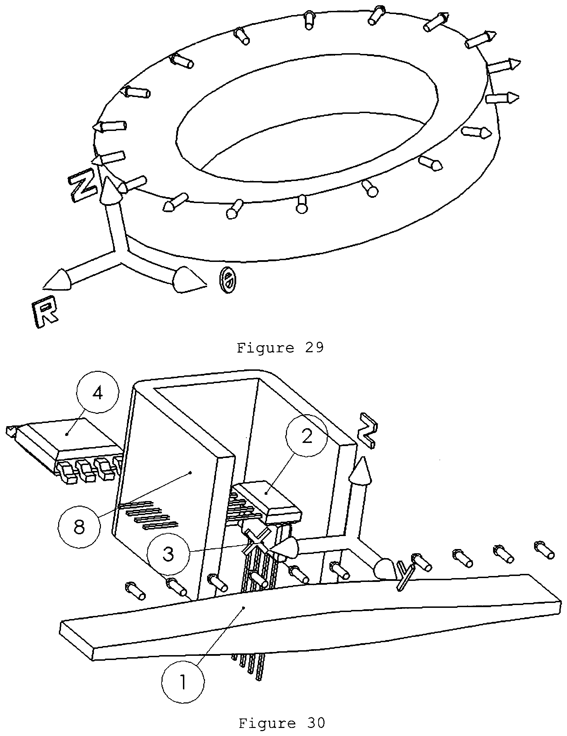

La figure 29 représente un aimant disque à épaisseur radiale variable suivant une fonction sensiblement sinusoïdale et aimanté sensiblement radialement. Pour cette configuration, la mesure de la composante tangentielle du champ magnétique au voisinage de l'aimant ainsi que la mesure de la composante radiale ou de la composante axiale ou d'une combinaison de ces deux composantes permet par un calcul d'arctangente du rapport des deux composantes après soustraction de l'offset éventuel d'obtenir la position angulaire de l'aimant.

La figure 30 montre un capteur linéaire suivant la présente invention avec un aimant (1) présentant une épaisseur variant sensiblement suivant une fonction sinusoïdale et un système de blindage (8) des champs magnétiques extérieurs dans le plan de mesure du ou des éléments magnéto-sensibles. Ce blindage est réalisé en matériau ferromagnétique permettant de diminuer ou d'annuler l'influence d'une source de champ magnétique situé au voisinage du capteur.

## Revendications

1. Capteur magnétique de déplacement angulaire ou linéaire comportant

   - soit au moins un aimant permanent (1) rectiligne défini dans un repère cartésien (x,y & z)
   - soit un aimant permanent (1) curviligne défini dans un repère cylindrique (r, Q & z) et au moins deux éléments magnéto-sensibles (2) et (3), l'aimant (1) étant mobile par rapport aux dits éléments magnéto-sensibles (2) et (3), dans lequel l'aimant (1) présente au moins une dimension variant suivant une fonction non constante quasi-sinusoïdale le long d'un axe de repère et
   - dans le cas d'un aimant défini dans un repère cartésien x,y,z, l'aimantation dudit aimant (1) est orientée suivant une seule direction x,y ou z;
   - dans le cas d'un aimant défini dans un repère cylindrique r,Q,z, l'aimantation dudit aimant (1) est orientée suivant une seule direction r,Q ou z.

2. Capteur magnétique de déplacement linéaire ou angulaire selon l'une au moins des revendications précédentes, **caractérisé en ce que** les éléments magnéto- sensibles mesurent deux composantes du champ magnétique sensiblement au même point.

3. Capteur magnétique de déplacement linéaire ou angulaire selon l'une au moins des revendications précédentes, **caractérisé en ce que** le calcul de la position est fait par un calcul du rapport de deux composantes du champ magnétique ou par un calcul d'arctangente de ce même rapport.

4. Capteur magnétique de déplacement linéaire ou angulaire selon l'une au moins des revendications précédentes, **caractérisé en ce que** le calcul de la position est réalisé par un calcul d'arctangente du rapport de deux composantes du champ magnétique après avoir appliquer un coefficient multiplicateur au rapport des deux composantes du champ magnétique considérées.

5. Capteur magnétique de déplacement linéaire ou angulaire selon l'une au moins des revendications précédentes, **caractérisé en ce que** le calcul du rapport des deux composantes du champ magnétique et/ou du calcul de 1 arctangente de ce rapport est réalisé par un composant électronique dédié.

6. Capteur magnétique de déplacement linéaire ou angulaire selon l'une au moins des revendications précédentes, **caractérisé en ce que** l'élément de calcul du rapport des deux composantes du champ magnétique et/ou du calcul de l' arctangente de ce rapport est intégré avec les éléments magnéto-sensibles dans un seul composant.

7. Capteur magnétique de déplacement linéaire ou angulaire selon l'une au moins des revendications précédentes, **caractérisé en ce que** les aimants permanents sont aimantés suivant leur largeur.

8. Capteur magnétique de déplacement linéaire ou angulaire selon l'une au moins des revendications précédentes, **caractérisé en ce que** les aimants permanents sont aimantés suivant leur épaisseur.

9. Capteur magnétique de déplacement linéaire ou angulaire selon l'une au moins des revendications précédentes, **caractérisé en ce que** les aimants permanents sont aimantés suivant leur longueur.

10. Capteur magnétique de déplacement linéaire ou angulaire selon l'une au moins des revendications précédentes, **caractérisé en ce que** les aimants sont montés et/ou encastrés sur une culasse ferromagnétique.

**11.** Capteur de position angulaire pour une course inférieure à 360° selon l'une au moins des revendications précédentes, **caractérisé en ce que** les aimants sont aimantés suivant leur épaisseur, et que le calcul de la position est obtenu par la mesure sensiblement en un même point des composantes tangentielle Bt et radiale Br ou axiale Bz et par un calcul atan(GAIN Bt/ (Br - Offset)) ou atan(GAIN Bt/ (Bz - Offset)).

**12.** Capteur de position angulaire pour une course inférieure ou égale à 360° selon l'une au moins des revendications précédentes, **caractérisé en ce que** les aimants sont aimantés suivant leur épaisseur ou radialement ou tangentiellement et que le calcul de la position est obtenu par la mesure de la même composante de l'induction magnétique, tangentielle Bt ou radiale Br ou axiale Bz, en trois points déphasés de $\Theta_1$, et $\Theta_2$ et par le calcul de la position angulaire obtenue par la résolution du système d'équation

$$B1 = Amplitude * Cos(Angle) + Offset$$

$$B2 = Amplitude * Cos(\ Angle + \Theta_1) + Offset \ .$$

$$B3 = Amplitude * Cos(\ Angle + \Theta_2) + Offset$$

**13.** Capteur de position angulaire pour une course inférieure à 360° selon la revendication 1, **caractérisé en ce que** deux éléments magnéto-sensibles mesurent deux composantes de l'induction magnétique sensiblement en un même point situé à mi-distance entre deux aimants empilés axialement d'épaisseur variable sensiblement suivant une fonction sinusoïdale.

**14.** Capteur de position angulaire pour une course proche de 360° selon la revendication précédente, **caractérisé en ce que** les deux aimants sont décalés angulairement l'un par rapport à l'autre.

**15.** Capteur magnétique de position suivant l'une quelconque des revendications précédentes, **caractérisé en ce que** le système intègre un dispositif de blindage des champs magnétiques extérieurs.


**Patentansprüche**

**1.** Magnetischer Winkel- oder Linearverschiebungssensor, der aufweist

- entweder mindestens einen geradlinigen Dauermagneten (1), der in einem kartesischen Koordinatensystem (x, y & z) definiert ist,
- oder einen gekrümmten Dauermagneten (1), der in einem zylindrischen Koordinatensystem (r, Q & z) definiert ist, und mindestens zwei magnetempfindliche Elemente (2) und (3), wobei der Magnet (1) bezüglich der magnetempfindlichen Elemente (2) und (3) beweglich ist,
wobei der Magnet (1) mindestens eine Abmessung aufweist, die gemäß einer nicht konstanten, praktisch sinusförmigen Funktion entlang einer Bezugsachse variiert, und
- im Fall eines in einem kartesischen Koordinatensystem x,y,z definierten Magneten die Magnetisierung des Magneten (1) gemäß einer einzigen Richtung x, y oder z ausgerichtet ist;
- im Fall eines in einem zylindrischen Koordinatensystem r,Q,z definierten Magneten die Magnetisierung des Magneten (1) gemäß einer einzigen Richtung r, Q oder z ausgerichtet ist.

**2.** Magnetischer Linear- oder Winkelverschiebungssensor nach mindestens einem der vorhergehenden Ansprüche, **dadurch gekennzeichnet, dass** die magnetempfindlichen Elemente zwei Komponenten des Magnetfelds im Wesentlichen am gleichen Punkt messen.

**3.** Magnetischer Linear- oder Winkelverschiebungssensor nach mindestens einem der vorhergehenden Ansprüche, **dadurch gekennzeichnet, dass** die Berechnung der Position durch eine Berechnung des Verhältnisses von zwei Komponenten des Magnetfelds oder durch Arcustangens-Berechnung dieses gleichen Verhältnisses durchgeführt wird.

**4.** Magnetischer Linear- oder Winkelverschiebungssensor nach mindestens einem der vorhergehenden Ansprüche, **dadurch gekennzeichnet, dass** die Berechnung der Position durch eine Arcustangens-Berechnung des Verhältnisses von zwei Komponenten des Magnetfelds durchgeführt wird, nachdem ein Multiplikationskoeffizient an das Verhältnis der zwei betrachteten Komponenten des Magnetfelds angewendet wurde.

**5.** Magnetischer Linear- oder Winkelverschiebungssensor nach mindestens einem der vorhergehenden Ansprüche, **dadurch gekennzeichnet, dass** die Berechnung des Verhältnisses der zwei Komponenten des Magnetfelds und/oder der Berechnung des Arcustangens dieses Verhältnisses von einem dedizierten elektronischen Bauteil durchgeführt wird.

**6.** Magnetischer Linear- oder Winkelverschiebungssensor nach mindestens einem der vorhergehenden Ansprüche, **dadurch gekennzeichnet, dass** das Element zur Berechnung des Verhältnisses der zwei Komponenten des Magnetfelds und/oder der Berechnung des Arcustangens dieses Verhältnisses mit den magnetempfindlichen Elementen in ein einziges Bauteil integriert wird.

**7.** Magnetischer Linear- oder Winkelverschiebungssensor nach mindestens einem der vorhergehenden Ansprüche, **dadurch gekennzeichnet, dass** die Dauermagnete gemäß ihrer Breite magnetisiert sind.

**8.** Magnetischer Linear- oder Winkelverschiebungssensor nach mindestens einem der vorhergehenden Ansprüche, **dadurch gekennzeichnet, dass** die Dauermagnete gemäß ihrer Dicke magnetisiert sind.

**9.** Magnetischer Linear- oder Winkelverschiebungssensor nach mindestens einem der vorhergehenden Ansprüche, **dadurch gekennzeichnet, dass** die Dauermagnete gemäß ihrer Länge magnetisiert sind.

**10.** Magnetischer Linear- oder Winkelverschiebungssensor nach mindestens einem der vorhergehenden Ansprüche, **dadurch gekennzeichnet, dass** die Magnete auf ein ferromagnetisches Joch montiert und/oder eingebettet sind.

**11.** Winkelpositionssensor für einen Hub von weniger als 360° nach mindestens einem der vorhergehenden Ansprüche, **dadurch gekennzeichnet, dass** die Magnete gemäß ihrer Dicke magnetisiert sind, und dass die Berechnung der Position durch die Messung im Wesentlichen an einem gleichen Punkt der tangentialen Bt und radialen Br oder axialen Komponenten Bz und durch eine Berechnung atan(GAIN Bt/(Br - Offset)) oder atan(GAIN Bt/(Bz - Offset)) erhalten wird.

**12.** Winkelpositionssensor für einen Hub von weniger als oder gleich 360° nach mindestens einem der vorhergehenden Ansprüche, **dadurch gekennzeichnet, dass** die Magnete gemäß ihrer Dicke oder radial oder tangential magnetisiert sind, und dass die Berechnung der Position durch die Messung der gleichen Komponente der magnetischen Induktion, tangential Bt oder radial Br oder axial Bz, an drei um $\Theta_1$ und $\Theta_2$ phasenverschobenen Punkten und durch die Berechnung der Winkelposition erhalten wird, die durch die Auflösung des Gleichungssystems erhalten wird:

$$B1 = Amplitude * Cos(Winkel) + Offset$$

$$B2 = Amplitude * Cos(Winkel + \Theta_1) + Offset$$

$$B3 = Amplitude * Cos(Winkel + \Theta_2) + Offset.$$

**13.** Winkelpositionssensor für einen Hub von weniger als 360° nach Anspruch 1, **dadurch gekennzeichnet, dass** zwei magnetempfindliche Elemente zwei Komponenten der magnetischen Induktion im Wesentlichen an einem gleichen Punkt messen, der sich in halbem Abstand zwischen zwei axial gestapelten Magneten einer Dicke befindet, die im Wesentlichen gemäß einer Sinusfunktion variabel ist.

**14.** Winkelpositionssensor für einen Hub nahe 360° nach dem vorhergehenden Anspruch, **dadurch gekennzeichnet, dass** die zwei Magnete winkelmäßig zueinander versetzt sind.

**15.** Magnetischer Positionssensor nach einem der vorhergehenden Ansprüche, **dadurch gekennzeichnet, dass** das System eine Abschirmvorrichtung der äußeren Magnetfelder umfasst.

**Claims**

1. Magnetic angular or linear displacement sensor comprising

   - either at least one rectilinear permanent magnet (1) defined in a Cartesian reference frame (x,y & z)
   - or a curvilinear permanent magnet (1) defined in a cylindrical reference frame (r, Q & z) and at least two magneto-sensitive elements (2) and (3), the magnet (1) being mobile with respect to the said magneto-sensitive elements (2) and (3), wherein the magnet (1) exhibits at least one dimension varying according to a quasi-sinusoidal non-constant function along a reference frame axis and
   - in the case of a magnet defined in a Cartesian reference frame x,y,z, the magnetization of the said magnet (1) is oriented according to a single direction x,y or z;
   - in the case of a magnet defined in a cylindrical reference frame r,Q,z, the magnetization of the said magnet (1) is oriented according to a single direction r,Q or z.

2. Magnetic linear or angular displacement sensor according to one at least of the preceding claims, **characterized in that** the magneto-sensitive elements measure two components of the magnetic field substantially at the same point.

3. Magnetic linear or angular displacement sensor according to one at least of the preceding claims, **characterized in that** the calculation of the position is done through a calculation of the ratio of two components of the magnetic field or through a calculation of arctangent of this same ratio.

4. Magnetic linear or angular displacement sensor according to one at least of the preceding claims, **characterized in that** the calculation of the position is carried out through a calculation of arctangent of the ratio of two components of the magnetic field after having applied a multiplier coefficient to the ratio of the two components considered of the magnetic field.

5. Magnetic linear or angular displacement sensor according to one at least of the preceding claims, **characterized in that** the calculation of the ratio of the two components of the magnetic field and/or of the calculation of the arctangent of this ratio is carried out by a dedicated electronic hardware component.

6. Magnetic linear or angular displacement sensor according to one at least of the preceding claims, **characterized in that** the element for calculating the ratio of the two components of the magnetic field and/or of the calculation of the arctangent of this ratio is integrated with the magneto-sensitive elements in a single hardware component.

7. Magnetic linear or angular displacement sensor according to one at least of the preceding claims, **characterized in that** the permanent magnets are magnetized according to their width.

8. Magnetic linear or angular displacement sensor according to one at least of the preceding claims, **characterized in that** the permanent magnets are magnetized according to their thickness.

9. Magnetic linear or angular displacement sensor according to one at least of the preceding claims, **characterized in that** the permanent magnets are magnetized according to their length.

10. Magnetic linear or angular displacement sensor according to one at least of the preceding claims, **characterized in that** the magnets are mounted on and/or built into a ferromagnetic yoke.

11. Angular position sensor for a travel of less than 360° according to one at least of the preceding claims, **characterized in that** the magnets are magnetized according to their thickness, and that the calculation of the position is obtained by measuring substantially at one and the same point the tangential Bt and radial Br or axial Bz components and by calculating atan(GAIN Bt/ (Br - Offset)) or atan(GAIN Bt/ (Bz - Offset)).

12. Angular position sensor for a travel of less than or equal to 360° according to one at least of the preceding claims, **characterized in that** the magnets are magnetized according to their thickness or radially or tangentially and that the calculation of the position is obtained by measuring the same component of the magnetic induction, tangential Bt or radial Br or axial Bz, at three points phase-shifted by $\Theta_1$ and $\Theta_2$ and by calculating the angular position obtained by solving the equation system

$$B1 = Amplitude * Cos(Angle) + Offset$$

$$B2 = Amplitude * Cos(Angle + \Theta_1) + Offset$$

$$B3 = Amplitude * Cos(Angle + \Theta_2) + Offset.$$

13. Angular position sensor for a travel of less than 360° according to Claim 1, **characterized in that** two magneto-sensitive elements measure two components of the magnetic induction substantially at one and the same point situated mid-way between two magnets stacked axially of thickness that can vary substantially according to a sinusoidal function.

14. Angular position sensor for a travel of close to 360° according to the preceding claim, **characterized in that** the two magnets are shifted angularly with respect to one another.

15. Magnetic position sensor according to any one of the preceding claims, **characterized in that** the system integrates a device for shielding the exterior magnetic fields.

Figure 1

Figure 2

Figure 3

Figure 4

Figure 5

Figure 6

Figure 7

Figure 8

EP 2 084 496 B1

Figure 9

Figure 10

Figure 11

Figure 12

Figure 13

Figure 14

Figure 15

Figure 16

Figure 17

Figure 18

Figure 19

Figure 20

Figure 21

Figure 22

**Btangentielle** · **Bradiale** · **Baxiale**

Figure 23

Figure 24

Figure 25

Figure 26

Figure 27

Figure 28

Figure 29

Figure 30

**EP 2 084 496 B1**

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- US 6433536 B
- US 2002089327 A
- US 2004017187 A
- GB 2020813 A